(19) Europäisches Patentamt / European Patent Office / Office européen des brevets

(11) **EP 2 887 632 A1**

(12) **EUROPEAN PATENT APPLICATION**

(43) Date of publication:
24.06.2015 Bulletin 2015/26

(51) Int Cl.:
*H04N 1/00* (2006.01)

(21) Application number: 14196227.4

(22) Date of filing: 04.12.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 18.12.2013 US 201314132188

(71) Applicant: Nokia Corporation
02610 Espoo (FI)

(72) Inventors:
• Noorkami, Maneli
San Francisco, CA California 94114 (US)
• Ahonen, Timo
San Carlos, CA 94070 (US)
• Zhou, Hui
Sunnyvale, CA California 94086 (US)
• Vaquero, Daniel
Sunnyvale, CA California 94086 (US)

(74) Representative: Nokia Corporation
Intellectual Property Department
Karakaari 7
02610 Espoo (FI)

(54) **Methods and apparatus for color balance correction**

(57) Systems and apparatus for white balance correction. A reference object appearing in a captured scene image is identified and a color transform is computed, based on known color balance information for the reference object. The color transform is based on a difference between color information for the reference object taken under known illumination and the apparent color balance of the reference object as it appears in the captured image. The color transform is applied to the captured image and a corrected image is created, based on applying the color transform to every pixel in the captured image.

300

| Step | Description |
|------|-------------|
| 302 | ILLUMINATE REFERENCE OBJECT WITH KNOWN ILLUMINATION |
| 304 | CAPTURE IMAGE OF REFERENCE OBJECT |
| 306 | MEASURE COLOR BALANCE OF REFERENCE OBJECT |
| 308 | STORE REFERENCE OBJECT INFORMATION |
| 310 | CAPTURE SCENE IMAGE |
| 312 | IDENTIFY LOCATION OF REFERENCE OBJECT IN SCENE IMAGE |
| 314 | COMPUTE COLOR TRANSFORM BASED ON APPARENT REFERENCE OBJECT COLOR BALANCE AND KNOWN COLOR BALANCE INFORMATION |
| 316 | APPLY COLOR TRANSFORM TO SCENE IMAGE TO PRODUCE CORRECTED IMAGE |
| 318 | STORE, TRANSFER, OR OTHERWISE USE CORRECTED IMAGE |

FIG.3

EP 2 887 632 A1

**Description**

TECHNICAL FIELD:

The present invention relates generally to image capture and processing. More particularly, the invention relates to improved systems and techniques for color correction in captured images.

BACKGROUND:

Photography (both still picture and motion picture) has constantly developed since its first invention, becoming less expensive and simpler throughout the decades.

From Niépce's photoetchings beginning in 1822 (the earliest surviving example of which is the 1826 *View from the Window at Le Gras,* earlier examples having been lost), through the development by Niépce and Dauguerre of photography using silver compounds, through the use of such compounds on media such as glass and celluloid, through the development of inexpensive and widely available cameras, through instant photography continuing with modem digital photography, the ability to record still and moving images has become more and more widespread until it is now nearly universal in developed societies. Many people document every aspect of their and their friends' lives and make and distribute images of every interesting event in their lives. Much photography is casual, carried out under widely varying lighting, by photographers who are uninterested in making meticulous camera adjustments. Such photographers, however, want their photographs to look attractive and to resemble the subject, particularly in terms of such properties as color balance. Color balance is a measure of the relative intensities of each color component of an image (such as red, blue, and green primary colors). Because it is particularly important that neutral colors (such as white or gray) colors appear correctly, color balance may also be referred to as white balance or gray balance. Color constancy is a characteristic of the human visual system - the human brain provides a relatively constant color perception over a significant range of wavelength variation of light illuminating the subject. Artificial mechanisms for capturing images, on the other hand, need to incorporate mechanisms for adjustment and correction in order to achieve such constancy.

SUMMARY:

In one embodiment of the invention, an apparatus comprises at least one processor and memory storing a program of instructions. The memory storing the program of instructions is configured to, with the at least one processor, cause the apparatus to at least identify a reference object appearing in a captured scene image, compute a color transform based on known color balance information for the reference object, taken under known illumination, wherein the color transform is based on a difference between the known color balance information for the reference object and the apparent color balance of the reference object as it appears in the captured image, apply the color transform to the captured image, and create a corrected image based on the application of the color transform to the captured image.

In another embodiment of the invention, a method comprises identifying a reference object appearing in a captured scene image, computing a color transform based on known color balance information for the reference object taken under known illumination, wherein the color transform is based on a difference between the known color balance information and the apparent color balance of the reference object as it appears in the captured image, applying the color transform to the captured image, and creating a corrected image based on the application of the color transform to the captured image.

In another embodiment of the invention, a non-transitory computer readable medium stores a program of instructions, execution of which by a processor configures an apparatus to at least identify a reference object appearing in a captured scene image, compute a color transform based on known color balance information for the reference object, taken under known illumination, wherein the color transform is based on a difference between the known color balance information and the apparent color balance of the reference object as it appears in the captured image, apply the color transform to the captured image, and create a corrected image based on the application of the color transform to the captured image.

BRIEF DESCRIPTION OF THE DRAWINGS:

Figs. 1 and 2 illustrate image processing and color correction systems according to embodiments of the present invention; and
Fig. 3 illustrates a process according to an embodiment of the present invention.

DETAILED DESCRIPTION:

The product of the spectral power of an illuminant and the reflectance of the illuminated object together determine the color stimulus captured by a camera sensor. The illuminating light, therefore, has a significant effect on the color stimulus. For example, if the color temperature of a light source is low, an image of a scene and objects within the scene that are illuminated by the source will tend toward reddish, and if the color temperature of a light source is high, the image will tend toward bluish. Automatic white balance mechanisms attempt to estimate the illumination in a scene and correct the colors in images as if they were taken under standard illumination. Such estimation is difficult because the available information does not isolate the color temperature of the illumination, but rather is a result of the illumination and the reflectance of objects within the scene. One mechanism used by professional photographers is to carry a color checker chart and to use the chart as a reference object by taking a photograph of the chart in the same location and time as the intended photograph. An image editing program can then be used to adjust the white balance used by the camera, but this approach is cumbersome and requires considerable skill. In addition, color sheets can fade so that the actual color is unknown. If the color of the reference object is unknown, color correction based on the reference object is unreliable.

These and other problems are addressed by embodiments of the present invention, which provides mechanisms for automatic correction based on a known reference object in an image. The reference object is illuminated using a known illumination and color information for the reference object is determined. In one approach, the reference object may be photographed under the known illumination to create a reference image and color information may be extracted based on the reference image. In another approach, color information for the reference object may be measured directly, without taking an image. Any suitable mechanism for obtaining color balance information for the reference object may be used.

When a photograph is taken in which the object appears, a color transform is computed based on the image of the object as it appears in the photograph and the stored information taken from photographing the object under a known illumination. The color transform is applied to every pixel in the image to produce a color correction for the entire image, applying to the entire image the correction needed to correct the apparent color of the reference object.

The location of the reference object in the image to be corrected may be determined automatically or the user may assist in locating the reference object - for example, the user may point to the object or may mark off a region in which the object is located. It will be recognized also that the reference object may be photographed under the known illumination at any time; such photographing need not be performed before the taking of the photograph that is to be corrected. Anytime the object and a known illumination source are available, the object can be photographed under the known illumination source and data captured to inform a color correction of an existing photograph in which the reference object appears.

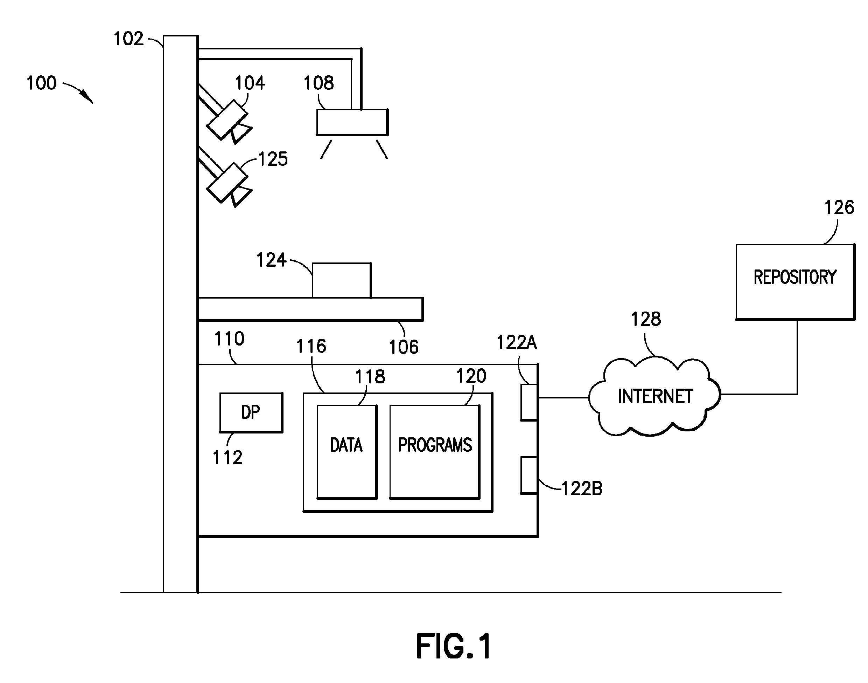

Thus, Fig. 1 illustrates a reference information system 100 according to an embodiment of the present invention. The system 100 comprises a reference color information station 102, which itself suitably comprises a camera 104, a platform 106, an illuminator 108, and a reference processing unit 110, which comprises at least one processor (DP) 112 and memory (MEM) 116. The memory 116 may comprise high speed memory, long term storage, or any combination thereof, and may store data 118 and programs (PROGS) 120. The reference processing unit 110 may also suitably comprise one or more wired or wireless interfaces such as the interfaces 122A and 122B, which may be used to control and receive information from elements such as the camera 104 and the illuminator 108.

A reference object 124 may be placed on the platform 106, and the object 124 may be illuminated by the illuminator 108, either independently of, or under the control of, the reference processing unit 110, depending on design and configuration choices. An image may be taken of the reference object 124 and provided to the reference processing unit 110 which may then extract and store color balance information. The image may be taken automatically under control of the processor 112, or may be taken by a user or under other automatic control separate from control of the processor 112. However the image is captured, it is at some point made accessible for color balance information extraction.

In addition, or as an alternative, color balance information for a reference object may simply be measured, without an actual image being taken. Thus, as an alternative or in addition to the camera 104, a chroma sensor 125 may be used. The chroma sensor 125 measures characteristics of light being reflected from the reference object 124 as the object 124 is illuminated by the illuminator 108, and determines color balance information for the reference object 124. It will also be recognized that the chroma sensor 125 may include its own built in illuminator and also that the particular configuration of the station 102 is chosen for convenience of illustration but the practice of embodiments of the invention is not limited to fixed positioning for the camera 104, reference object 124, and chroma sensor 125, but these devices may be arranged in any desired manner and may communicate through wire or wirelessly.

Extracted color balance information may be stored in the memory 118, and may also or as an alternative be transferred to an external data repository 126, which may be accessible through a network such as the Internet 128.

In one exemplary embodiment of the invention, the reference color information station 102 may be operated by or on behalf of an enterprise. The enterprise may package a photography product such as a camera, photography capable mobile telephone, or image editing software with a reference object that can be placed in a scene to be photographed. The object may be wearable and may be, for example, a hat or badge, or may be adapted to be held by a person in a photograph, or the object may be adapted to be placed in a scene. Such an object adapted to be held or placed in a scene may, for example, take the form of a toy or stuffed animal. A user can take a picture, insuring that the packaged reference object appears in the scene, and color balance information for the reference object being photographed can be built into the photography product or, in another embodiment, made accessible to a user of a product - for example, by connection through the Internet 128 with the repository 126. As a further alternative, reference objects such as the reference object 124 might be sold together with access to color balance information, and such reference objects might take any of numerous different forms, such as clothing, decorative objects, ornaments, or toys. Such objects may be associated with identifiers that can be provided to a photography product, such as by storing the identifier in a camera or photography-enabled telephone, or embedding the identifier in a reference object, such as in the form of a bar code or radiofrequency identifier. When the identifier is read, the photography product can retrieve the proper color balance information from its own onboard memory or from the repository 126.

The system 100 has been illustrated and discussed as a separate mechanism for obtaining reference image information in order to illustrate mechanisms that may be particularly convenient for casual users. The information obtained by a system such as the system 100 may be made available to a user with very little work or consideration from the user. It will be recognized, however, that embodiments of the present invention can be devised that give the user as much control as desired, allowing a user to select his or her own reference object or to identify an object appearing in a captured image and then to capture a reference image of that object, with information obtained from the reference image then being used to color correct the existing scene image.

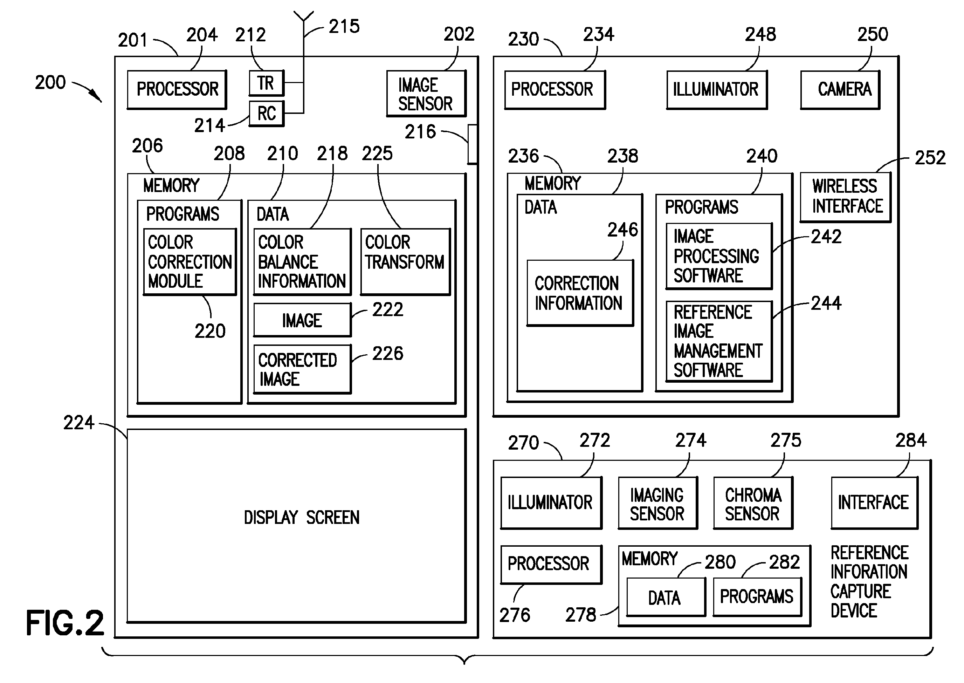

Thus, Fig. 2 illustrates a photography and correction system 200 according to an embodiment of the present invention, comprising an image capture device, a correction image capture device, a correction and image processing station, and an interface for connection to a correction information repository such as the repository of 126 of Fig. 1. The system 200 thus comprises a mobile telephone 201 having photographic capabilities, comprising an image sensor 202, processor 204, memory 206 storing data 210 and programs 208, transmitter 212, receiver 214, antenna 215, and interface 216. The mobile telephone 201 includes color balance information 218, which may include color balance information that has already been locally stored, identifier information for reference objects, and retrieval information for stored color balance information associated with reference objects and their identifiers. For example, the telephone 201 may collect color balance information for reference objects from the repository 126 of Fig. 1, communicating through wired or wireless networking, which may be accomplished through a cellular system, a wired local area network, or a wireless local area network, for example.

When a camera function is selected for the mobile telephone 200, a color correction module 220 may be activated. The color correction module 220 may be implemented as one or more of the programs 208, and allows for identification and location of a reference object, retrieval of color balance information for the reference object, and correction of an image in which the reference object appears, based on the color balance information.

Once the color correction module 220 is activated (for example, automatically upon selection of the camera function or through an explicit user selection), the module 220 undertakes to identify the reference object or objects being used. This may be accomplished, for example, through automatic identification or through an explicit user selection. Color balance information for the reference object or objects is identified, and access to the information is established (for example, retrieving it for local storage in the telephone 200, identifying a retrieval address, or using some other suitable mechanism for making the needed color balance information accessible for use.

When a user takes a picture, an image 222 is captured to memory 206 as part of data 210. The image 222 may be presented to a user by means of a display screen 224. The color correction module 220 may process the image to perform color correction using the color balance information in order to apply to the entire image the correction needed to achieve the correct color balance for the reference object. First, the color correction module 220 identifies the reference object in the image. This may be performed automatically or with user intervention. For example, the user may be signaled with a request to indicate the position of the reference object or to specify a region in which the reference object appears. Once the reference object has been identified, the color balance of the reference object as the object appears in the image is analyzed, and a color transform 225 (which may also be referred to as a chromatic adaptation) needed to correct the apparent color of the object is computed, with the color transform being based on the difference between the apparent color of the reference object and the known, previously measured color.

The computed color transform 225 may then be applied to pixels within the image, so that the image is thus color corrected in such a way as to achieve the correct known, measured color for the reference object. In an examplary embodiment, the color transform 225 may then be applied to pixels within the image.

A color transform, or chromatic transform, is computed that transforms the color of the selected pixel to the measured color of the reference object. One example of a chromatic transform is the von Kries transform, but any appropriate transform may be used. In one or more embodiments of the invention, a white point conversion may be performed. If the color of the illuminant (white point) of the reference object is known, then in the LMS color space, the white point conversion can be performed as follows:

$$L_{out} = L2 \,/\, L1 * L_{in}$$

$$M_{out} = M2 \,/\, M1 * M_{in}$$

$$S_{out} = S2 / S1 * S_{in}$$

where (L2, M2, S2) are the coordinates in LMS color space of the white point corresponding to a standard illuminant (such as D65) and (L1, M1, S1) are the coordinates in LMS color space of the white point of the illuminant in the image. (L1, M1, S1) is unknown, but the measured color of the object under a known illuminant ($L_{out}$, $M_{out}$, $S_{out}$) is known, as is the input image pixel value ($L_{in}$, $M_{in}$, $S_{in}$) for a selected pixel (such as a user selected pixel). This information can be used to compute the ratios L2/L1, M2/M1, and S2/S1, which completely define the transform. If the spectrum of the known illumination and the standard illumination are known, a similar transform can be used to go from the known illumination to the standard illumination of D65.

A corrected image 226 may then be held in memory 206 for presentation to the user, and may also be stored in long term storage, either automatically or in response to a command from the user.

It will be recognized that more than one reference object may be used, and a captured image may include images of multiple reference objects. Multiple reference objects may be photographed under known illuminations and color information stored for each object. If multiple reference objects appear in a single image of a scene, a color transform may be computed for each object and a combined estimate may be computed for the transforms in order to bring the overall image into conformity with the color of the known reference objects. It will be recognized that an object need not be specifically identified as a reference object before an image in which the object appears is captured. If an object appearing in an image can be photographed under known illumination to create a reference image, the information obtained from the reference image can be used for color correction at any time, so long as the object has the same coloring at the time the reference image is captured and the time the scene image is captured. Thus, a reference object may be photographed and a reference image created by a photography product manufacturer or vendor, or a user may, before capturing a scene image, photograph a reference object to create a reference image. Alternatively, if a user has access to an object appearing in an image, the user may photograph that object at any convenient time in order to create a reference image, and the reference image may be used for color correction for any image in which the reference object appears. Once the reference image is captured and stored, it may be used to perform color correction for existing or subsequently captured images, with the reference object being located in an image and a color transform being performed to correct the image based on the difference between the apparent color and the measured color of the reference object.

It will be understood that a reference image station 102 is described in connection with Fig. 1 above for convenience in illustrating the idea that a manufacturer may collect information for a reference object and make this information available to users, and in the example above, the camera 201 collected such information and used it to perform color correction. It will be recognized, however, that this approach is one of a number of examples, and that (as noted above) a system such as the system 200 may include an image processing and color correction station 230. In the present example, a station 230 may include a processor 234, memory 236, data 238, and programs 240, with the programs 240 including image processing software 242 and reference image management software 244, and data 238 including correction information 246, including reference object identifiers and reference object information. A user may capture a reference image of a reference object under a known illumination source 248 of the reference station 230, using a camera 250 built into the image processing station 230, the camera 201, or any other suitable image capture device. Reference object information may be supplied (for example, using a wireless interface 252) to a photography-capable device such as the telephone 201, stored in the correction information repository 246, or both, and may be used by the image processing software 242 to perform color correction in a way similar to that described above.

The system 200 may also include a self-contained reference information capture device 270, comprising an illuminator 272 and an imaging sensor 274, a chroma sensor 275, or both. The reference information capture device 270 may also comprise a processor 276, memory 278, data 280, programs 282, and an interface 284, which may suitably be a wireless interface. The reference information capture device 270 can be used to illuminate an object and sense the color of the object, providing color information to, for example, the reference station 230 or the telephone 201. The reference information capture device 270 can be used to capture true color information for reference objects conveniently, and a user can easily illuminate an object and perform color capture on the object under the known illumination before or after taking a photograph. A user might, for example, photograph a scene, observe that the color cast of the scene is unsatisfactory, and choose an object appearing in the scene to use as a reference object. The true color information can be supplied to any device used to process a captured scene image to provide a corrected image (by identifying the reference object within the captured image, computing a color transform needed to color correct the image of the reference object, and applying the color correction to every pixel within the captured scene image), and can also be stored for later use. In one approach, the device 270 may use the imaging sensor 274 to capture an image of the reference object, which may then be processed to extract color balance information. In another approach, the device 270 may use the chroma sensor 275 to measure color values of the reference object and process the measurements to determine and store color balance information. Any other suitable approach may be used to determine the reflectance of the reference object. This information can be stored in the memory 278 and provided to any desired device - for example, using the interface 284.

Any number of objects may be used as reference objects, but some particularly useful choices might be clothing. For example, a user might capture reference images of favorite clothing items, such as shirts or hats, and wearing such items in photographed scenes would make it easy to perform nearly automatic color correction. A photography-enabled device could be made aware that specified clothing items would appear in a scene, and could identify the specified items and based color correction on the known color of the items. A device such as the reference image capture device 270 would be particularly suitable for capture of such reference images, being configured to both provide a known illumination and capture color information. A device such as the device 270 would suitably be of a size to be handheld and easily operated by a user. In addition, the device 270 may, as noted above, have its own image capture capabilities, and these capabilities may be used to capture a scene. The device 270 may also use its reference object color balance determination capabilities to perform color correction for its own scene images.

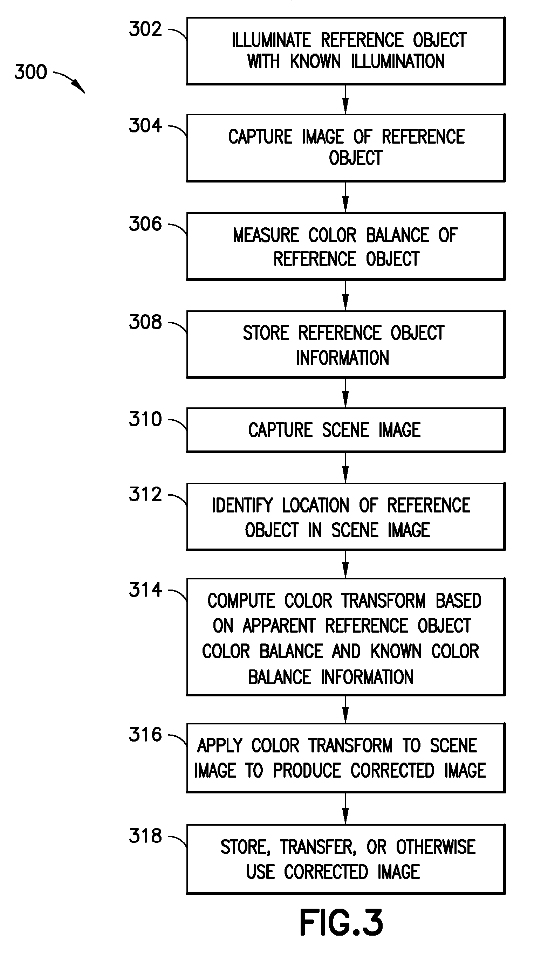

Fig. 3 illustrates a process 300 according to an embodiment of the present invention. At block 302, a reference object is illuminated with a known illumination and at block 304 an image of the reference object is captured. At block 306, color balance of the reference object is measured based on the captured reference object image and the known illumination. Color balance information under known illumination indicates the reflectance of the reference object, so that color balance information and reflectance information are provided by the measurement. At block 308, reference object information is stored, such as locally in a camera or other photography capable device, at an image processing station, at a central repository, or at any other suitable location or combination of locations. At block 310, a scene image is captured in which the reference object appears. At block 312, the location of the reference object in the scene image is identified and at block 314, a chromatic transform is computed based on the difference between the known color balance of the reference object and the color balance of the reference object as it appears in the scene. At block 316, the color transform is applied to the scene image, suitably applying to each pixel of the image the color transform needed to correct the image of the reference object. At block 318, the scene image is stored or otherwise transferred or made available for use.

Referring again to Figs. 1 and 2, at least one of the programs stored in the various memories is assumed to include a set of program instructions that, when executed by the associated processor, enable the device to operate in accordance with the exemplary embodiments of this invention, as detailed above. In these regards the exemplary embodiments of this invention may be implemented at least in part by computer software stored in the memories, with the software being executable by a processor. Alternatively or in addition, embodiments may be implemented by hardware, or by a combination of tangibly stored software and hardware (and tangibly stored firmware). Electronic devices implementing these aspects of the invention need not be the entire devices as depicted at Figure 1 or Fig. 2 or may be one or more components of same such as the above described tangibly stored software, hardware, firmware and data processor or a system on a chip SOC or an application specific integrated circuit ASIC.

In general, the various embodiments of the telephone 201 or the reference image capture device 270 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable memories include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the processors include but are not limited to general purpose computers, special purpose computers, microprocessors, digital signal processors (DSPs) and multi-core processors.

Electronic devices implementing these aspects of the invention need not be the entire devices as depicted at Figure 1 or Fig. 2 or may be one or more components of same such as the above described tangibly stored software, hardware, firmware and DP, or a system on a chip SOC or an application specific integrated circuit ASIC.

While various exemplary embodiments have been described above it should be appreciated that the practice of the invention is not limited to the exemplary embodiments shown and discussed here. Various modifications and adaptations to the foregoing exemplary embodiments of this invention may become apparent to those skilled in the relevant arts in view of the foregoing description. It will be further recognized that the various blocks illustrated in Fig. 3 and discussed above may be performed as steps, but the order in which they are presented is not limiting and they may be performed in any appropriate order with or without additional intervening blocks or steps.

Further, some of the various features of the above non-limiting embodiments may be used to advantage without the corresponding use of other described features.

The foregoing description should therefore be considered as merely illustrative of the principles, teachings and exemplary embodiments of this invention, and not in limitation thereof.

## Claims

1.  A method comprising:

    identifying a reference object appearing in a captured scene image;
    computing a color transform based on known color balance information for the reference object, wherein the color transform is based on a difference between known color balance information for the reference object taken under known illumination and the apparent color balance of the reference object as it appears in the captured image;
    applying the color transform to the captured image; and
    creating a corrected image based on the application of the color transform to the captured image.

2.  The method of claim 1, wherein applying the color transform to the captured image comprises applying color correction, wherein the color correction applied is that calculated to correct the apparent color of the reference object to the known color.

3.  The method of claim 2, wherein applying the color transform to the captured image comprises applying color correction to each pixel of the image.

4.  The method of claim 2, wherein applying the color transform to the captured image comprises applying color correction to the entire image.

5.  The method of claim 1, wherein the known color balance information is previously stored color balance information taken from a previously captured reference image.

6.  The method of claim 1, wherein the known color balance information is based on processing a reference image of the reference object, wherein the reference image is of the reference object under known illumination.

7.  The method of claim 6, wherein the color balance information under known illumination indicates a reflectance of the reference object.

8.  The method of claim 1, wherein the reference object is automatically detected in the scene image.

9.  The method of claim 1, wherein the reference object is a specified standard reference object and wherein identifying and color balance information for the reference object is retrieved from a central repository.

10. The method of claim 1, wherein detecting the reference object comprises requesting a user to indicate a position of the reference object or to specify a region in which the reference object appears.

11. The method of claim 1, wherein the color transform comprises von Kries transform.

12. An apparatus configured to:

    identify a reference object appearing in a captured scene image;
    compute a color transform based on known color balance information for the reference object, wherein the color transform is based on a difference between a known color balance information for the reference object under known illumination and the apparent color balance of the reference object as it appears in the captured image;
    apply the color transform to the captured image; and
    create a corrected image based on the application of the color transform to the captured image.

13. The apparatus of claim 12, wherein the apparatus is further configured to perform the methods as claimed in any of the claims 2 to 11.

14. The apparatus of claim 12 or 13, wherein the apparatus comprises a mobile phone.

15. A computer program product comprising program instructions, which when executed by an apparatus cause the apparatus to perform the method as claimed in any of the claims 1 to 11.

**FIG.1**

EP 2 887 632 A1

FIG.2

EP 2 887 632 A1

FIG.3

EP 2 887 632 A1

**EUROPEAN SEARCH REPORT**

Application Number

EP 14 19 6227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/162862 A1 (ZHAO YONGHUI [US] ET AL) 27 June 2013 (2013-06-27) | 1-10, 12-15 | INV. H04N1 |
| Y | * abstract * * paragraphs [0020], [0030] - [0044] * | 11 | |
| X | US 2010/245617 A1 (SHUSTER GARY STEPHEN [US]) 30 September 2010 (2010-09-30) | 1-6,12, 15 | |
| A | * abstract * * paragraphs [0033] - [0037]; figure 5 * | 7-11,13, 14 | |
| Y | JP 2005 151163 A (RICOH KK) 9 June 2005 (2005-06-09) | 11 | |
| A | * abstract * * paragraphs [0065], [0082], [0096] * | 1-10, 12-15 | |

TECHNICAL FIELDS SEARCHED (IPC)

H04N

The present search report has been drawn up for all claims

| Place of search | Date of completion of the search | Examiner |
|---|---|---|
| The Hague | 20 April 2015 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 6227

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2015

| Patent document cited in search report | Publication date | Patent family member(s) | Publication date |
|---|---|---|---|
| US 2013162862 A1 | 27-06-2013 | NONE | |
| US 2010245617 A1 | 30-09-2010 | NONE | |
| JP 2005151163 A | 09-06-2005 | JP 4415650 B2<br>JP 2005151163 A | 17-02-2010<br>09-06-2005 |

EPO FORM P0459

For more details about this annex : see Official Journal of the European Patent Office, No. 12/82